# FASCICULE DE BREVET EUROPEEN

(11) **EP 0 991 555 B1**
(45) Date de publication et mention de la délivrance du brevet: **17.07.2002**
(21) Numéro de dépôt: 98925701.9
(22) Date de dépôt: 14.05.1998
(51) Int. Cl.: B60T 13/565, B60T 13/573

(54) **MAITRE-CYLINDRE A REACTION HYDRAULIQUE DYNAMIQUE REGLEE PAR UNE DIFFERENCE DE SECTIONS**
HAUPTZYLINDER MIT HYDRAULISCH DYNAMISCHER REAKTION GEREGELT DURCH EINEN QUERSCHNITTSUNTERSCHIED
MASTER CYLINDER WITH HYDRAULIC REACTION SET BY A DIFFERENCE OF SECTIONS

(30) Priorité: 27.06.1997 FR 9708123
(43) Date de publication de la demande: 12.04.2000
(73) Titulaire: BOSCH SISTEMAS DE FRENADO, S.L., 08080 Barcelona 6 (ES)
(72) Inventeur: SIMON BACARDIT, Juan, Bosch Systèmes de Freinage, F-93700 Drancy (FR)
(74) Mandataire: Hurwic, Aleksander Wiktor
(86) Numéro de dépôt international: FR9800952
(87) Numéro de publication internationale: WO9900282

(56) Documents cités:
- WO-A-96/07572
- DE-A- 4 101 480
- FR-A- 2 696 142

## Description

La présente invention concerne un maître-cylindre à réaction hydraulique pour servomoteur pneumatique d'assistance au freinage, comprenant : un corps percé d'un alésage principal; un piston principal cylindrique, percé d'un alésage secondaire, et dont une extrémité externe au corps est susceptible de recevoir une force d'assistance orientée suivant une première direction, ce piston principal étant monté coulissant de façon étanche dans l'alésage principal pour y délimiter une chambre de travail soumise en fonctionnement à une pression hydraulique; et des moyens de réaction hydraulique montés coulissants dans l'alésage secondaire et incluant un poussoir dont une extrémité externe au corps est susceptible de recevoir une force d'actionnement orientée suivant la première direction, la force d'assistance présentant par rapport à la force d'actionnement un retard croissant avec une vitesse d'application de la force d'actionnement.

Un maître-cylindre de ce type est par exemple décrit dans le brevet FR - 2 724 354.

Des dispositifs de ce type ont été développés de façon très récente pour leur aptitude à pallier les défauts dynamiques des servomoteurs pneumatiques d'assistance au freinage.

On sait en effet que les servomoteurs pneumatiques d'assistance au freinage, qui sont utilisés pour fournir une force d'assistance de freinage s'ajoutant à la force d'actionnement exercée par le conducteur sur la pédale de frein et en théorie proportionnelle à cette dernière, présentent le défaut de ne pouvoir développer cette force d'assistance qu'après une certain retard par rapport à la force d'actionnement.

Comme la force d'assistance résulte d'une différence entre les pressions pneumatiques régnant respectivement dans une chambre avant du servomoteur, reliée à une source de dépression, et dans une chambre arrière, reliée à l'atmosphère lors du freinage, et comme le retard de la force d'assistance sur la force d'actionnement est dû à une limitation du débit de l'air atmosphérique admis dans la chambre arrière à travers le clapet d'entrée du servomoteur au moment du freinage, ce retard est d'autant plus important que le freinage est brusque.

Or, les situations dans lesquelles le freinage est rapide sont en général des situations d'urgence, dans lesquelles le conducteur aurait au contraire précisément besoin, le plus tôt possible, de la plus grande force d'assistance possible.

Ces considérations ont conduit, tout récemment, au développement de maîtres-cylindres à réaction hydraulique autorisant d'une part une plus grande amplitude d'ouverture du clapet d'entrée du servomoteur, donc un débit d'air accru, et d'autre part une modulation dynamique de la force de réaction, c'est-à-dire une modulation, en fonction de la vitesse de freinage, de la fraction de la force d'assistance que le maître-cylindre à réaction oppose à la force d'actionnement pour ajuster la force d'assistance en fonction de cette force d'actionnement.

Grâce à des dispositifs décrits dans des documents non pré-publiés, il est ainsi possible de réduire considérablement la force de réaction en cas de freinage d'urgence par rapport à la valeur qu'elle présente en cas de freinage normal, ce qui permet corrélativement d'augmenter la force de freinage disponible dans les situations de freinage d'urgence.

Cependant, un problème encore rencontré dans le développement de ces dispositifs réside dans la difficulté de donner des valeurs très élevées au rapport de la force d'assistance à la force d'actionnement, c'est-à-dire des valeurs très faibles à la force de réaction.

La présente invention a pour but de proposer une solution à ce problème.

A cette fin, le maître-cylindre de l'invention, par ailleurs conforme au préambule ci-dessus, est essentiellement caractérisé en ce que les moyens de réaction hydraulique comprennent, outre le poussoir : un piston central d'obturation, succédant au poussoir suivant la première direction et comportant une extension radiale sollicitée contre un épaulement interne du piston principal par une première force élastique orientée suivant la première direction, ce piston central d'obturation présentant en outre une face frontale tournée vers la première direction et portant un siège d'obturation; un piston de réaction étagé et creux, présentant une première section interne dans laquelle le piston central d'obturation est monté à coulissement étanche, une seconde section interne succédant à la première section interne dans la première direction, et une section externe coulissant de façon étanche dans l'alésage secondaire, ce piston de réaction étant sollicité, par une seconde force élastique orientée suivant une seconde direction inverse de la première direction et d'intensité inférieure à la première force élastique, vers une position de repos dans laquelle il est en appui contre l'extension radiale, ce piston de réaction repoussant à son tour le poussoir, suivant la seconde direction, contre une butée mobile se déplaçant avec l'extension radiale; et un piston de changement de rapport, tubulaire, ouvert sur la chambre de travail, monté à coulissement étanche dans la seconde section interne du piston de réaction, et présentant une position de repos dans laquelle il est en appui contre le siège d'obturation sous l'effet d'une troisième force élastique orientée suivant la seconde direction et inférieure à la seconde force élastique, ce piston de changement de rapport comportant une butée d'entraînement permettant au piston de réaction de l'entraîner suivant la première direction après une course non nulle à partir de la position de repos de ce piston de réaction, ce dont il résulte que le piston de changement de rapport fait sélectivement communiquer la première section interne du piston de réaction avec la chambre de travail en réponse à une application rapide de la force d'actionnement sur le poussoir, se transmettant au piston de changement de rapport par l'intermédiaire du piston de réaction.

Dans la configuration la plus simple, le piston de réaction comporte des pattes d'appui qui s'étendent suivant la seconde direction au-delà de l'extension radiale du piston central d'obturation et par lesquelles il est en appui contre le poussoir.

Dans cette configuration, la butée mobile peut elle-même être constituée par un rétrécissement interne d'une bague sollicitée par la première force élastique contre l'extension radiale du piston central d'obturation.

Grâce à l'invention, il est ainsi possible de réduire à volonté la force de réaction en cas de freinage d'urgence, et même de l'annuler totalement en donnant le même diamètre à la première section interne et à la section externe du piston de réaction.

La première force élastique peut, le plus simplement possible, être exercée par un premier ressort travaillant en compression entre la bague et un premier appui fixe prévu dans l'alésage secondaire, la seconde force élastique par un second ressort travaillant en compression entre un épaulement externe du piston de réaction et un second appui fixe prévu dans l'alésage secondaire, et la troisième force élastique par un troisième ressort travaillant en compression entre le piston de réaction et le piston de changement de rapport.

D'autres caractéristiques et avantages de l'invention ressortiront clairement de la description qui en est faite ci-après, à titre indicatif et nullement limitatif, en référence aux dessins, dans lesquels :
- la figure 1 est une vue globale en coupe d'un servomoteur incorporant le maître-cylindre de l'invention; et
- la figure 2 est une vue en coupe agrandie de la partie du maître-cylindre dans laquelle se concentrent les caractéristiques avantageuses de l'invention.

Comme indiqué précédemment, l'invention concerne un maître-cylindre à réaction hydraulique 1 destiné à équiper un servomoteur pneumatique d'assistance au freinage 2.

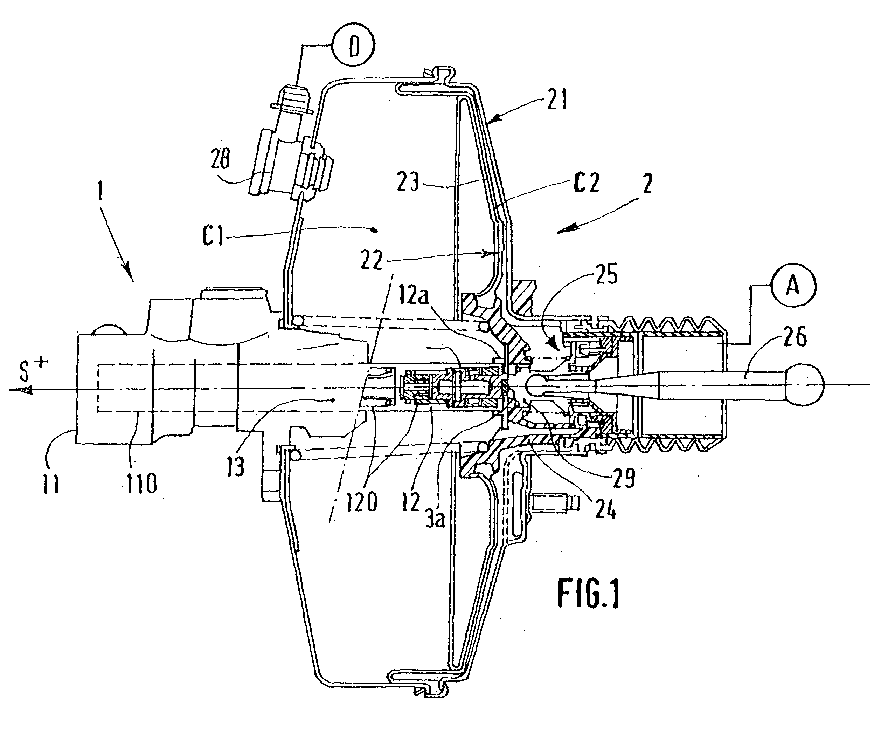

De façon connue en soi, le servomoteur pneumatique d'assistance comprend (figure 1) une enveloppe rigide 21, une cloison mobile 22 comportant une jupe rigide 23, un piston pneumatique 24, un clapet à trois voies 25, et une tige de commande 26 actionnée par une pédale de frein (non représentée).

La cloison mobile 22 sépare de façon étanche le volume intérieur de l'enveloppe rigide 21 en deux chambres pneumatiques C1 et C2, de volume complémentaire et variable.

La première chambre, ou chambre avant C1 est reliée à une source de basse pression D par l'intermédiaire d'une valve anti-retour 28, et la seconde chambre, ou chambre arrière C2 est susceptible d'être sélectivement reliée, au moyen du clapet à trois voies 25, soit à la source de basse pression D, soit à une source de pression relativement haute A, par exemple l'atmosphère.

Grâce à cet agencement connu en soi, l'actionnement du clapet à trois voies 25, qui permet de relier la chambre arrière C2 à la seconde source A, provoque une différence de pression entre les chambres avant et arrière C1 et C2, la cloison mobile 22 se trouvant ainsi sollicitée par une force qui représente la force d'assistance du servomoteur, et se déplaçant à l'intérieur de l'enveloppe 21.

En pratique, le clapet à trois voies 25 est porté par le piston 24 et son ouverture sur la chambre arrière est commandée par l'application d'une force d'actionnement suivant la direction axiale S+ sur la tige de commande 26, cette tige étant elle-même portée par le piston 24 et se terminant par un palpeur 29.

Le maître-cylindre 1 est disposé dans le prolongement de la tige de commande 26 et comprend essentiellement un corps 11 duquel font saillie un piston principal 12 et un poussoir 3, ce poussoir faisant partie de moyens de réaction hydraulique qui seront détaillés ultérieurement et qui font plus spécifiquement l'objet de l'invention.

Le corps 11 est percé d'un alésage principal 110, dans lequel le piston principal 12, de forme cylindrique et percé d'un alésage secondaire 120, est monté coulissant de façon étanche pour y délimiter une chambre de travail 13 soumise en fonctionnement à une pression hydraulique.

L'extrémité 12a du piston principal 12, qui se trouve à l'exterieur du corps 11, offre un appui au piston pneumatique 24, de manière à recevoir la force d'assistance transmise à ce piston pneumatique 24 par la cloison mobile 22 dans son ensemble, et orientée suivant la direction axiale S+.

De façon similaire, l'extrémité 3a du poussoir, qui se trouve à l'exterieur du corps 11, offre un appui au palpeur 29 pour recevoir la force d'actionnement exercée par le conducteur suivant la direction axiale S+ et transmise par la tige de commande 26.

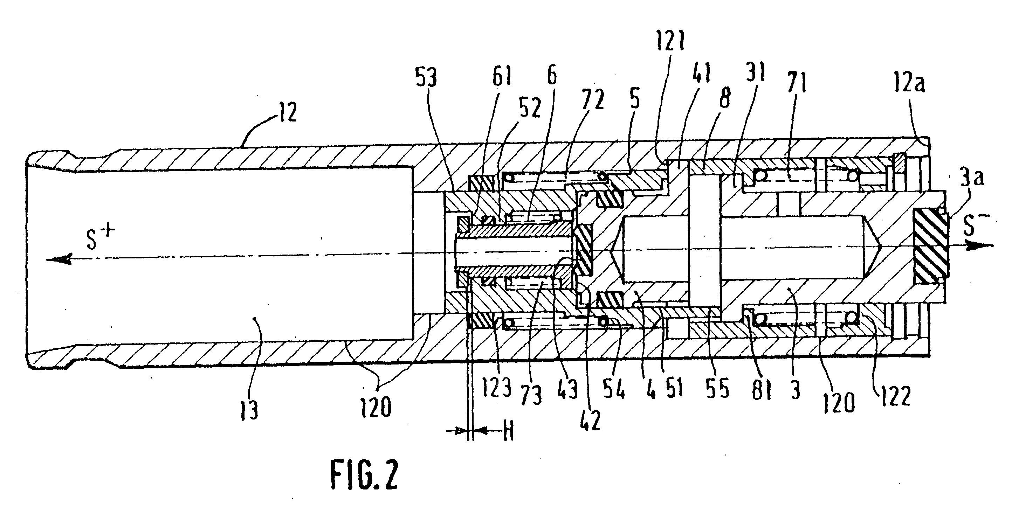

Les moyens de réaction hydraulique qui font plus particulièrement l'objet de l'invention (figure 2) comprennent essentiellement, outre le poussoir 3, un piston central d'obturation 4, un piston de réaction 5, et un piston de changement de rapport 6.

Le piston central d'obturation 4 est disposé en aval du poussoir 3 par rapport à la direction S+ et comporte une extension radiale 41 qui est sollicitée contre un épaulement interne 121 du piston principal 12 par un premier ressort 71.

Plus précisément, ce ressort 71, qui travaille en compression entre un premier appui fixe 122 prévu dans l'alésage secondaire 120 et une butée mobile 81 constituée par un rétrécissement interne d'une bague 8, exerce sur l'extension radiale 41, par l'intermédiaire de la bague 8, une force élastique orientée suivant la direction S+.

En outre, le piston central d'obturation 4 présente une face frontale 42 tournée vers la direction S+ et portant un siège d'obturation 43.

Le piston de réaction 5 est étagé et creux et présente une première section interne 51, dans laquelle le piston central d'obturation 4 est monté à coulissement étanche, une seconde section interne 52 succédant à la première section interne 51 dans la direction S+, et une section externe 53 coulissant de façon étanche dans l'alésage secondaire 120.

Ce piston de réaction est sollicité, par un second ressort 72 agissant suivant une direction S-inverse de la direction S+, vers une position de repos, qui est celle que représente la figure 2, et dans laquelle ce piston de réaction est en appui contre l'extension radiale 41.

A cette fin, le second ressort 72, qui présente une raideur inférieure à celle du premier ressort 71, travaille en compression entre un épaulement externe 54 du piston de réaction 5 et un second appui fixe 123 prévu dans l'alésage secondaire 120.

Comme le montre la figure 2, le piston de réaction 5 comporte des pattes d'appui 55 qui s'étendent suivant la direction inverse S- au-delà de l'extension radiale 41 du piston central d'obturation 4, et par lesquelles le piston de réaction 5 est en appui, sous l'effet du ressort 72, contre le rebord 31 du poussoir 3, qui se trouve ainsi repoussé, suivant la direction inverse S-, contre la butée mobile 81.

Le piston de changement de rapport 6 est tubulaire, ouvert sur la chambre de travail 13, et monté à coulissement étanche dans la seconde section interne 52 du piston de réaction 5.

Ce piston de changement de rapport 6 présente une position de repos, qui est celle que représente la figure 2, et dans laquelle il est en appui contre le siège d'obturation 43 sous l'effet d'un troisième ressort 73 qui présente une raideur inférieure à la raideur du second ressort 72, qui travaille en compression entre le piston de réaction 5 et le piston de changement de rapport 6 et qui exerce donc sur ce piston de changement de rapport 6 une force élastique orientée suivant la direction inverse S-.

Le piston de changement de rapport 6 comporte par ailleurs une butée d'entraînement 61 permettant au piston de réaction 5 de l'entraîner suivant la direction S+ après une course H non nulle à partir de la position de repos de ce piston de réaction.

Enfin, dans un mode de réalisation extrême de l'invention, la première section interne 51 et la section externe 53 du piston de réaction 5 ont même diamètre.

Le fonctionnement du maître-cylindre de l'invention est le suivant.

En cas d'application sur la tige de commande d'une force d'actionnement variant de façon relativement lente, l'enfoncement du palpeur 29 sur une distance inférieure ou égale à la course H pour laquelle le piston de réaction 5 entraîne le piston de changement de rapport 6, provoque l'ouverture du clapet 25, donc l'admission d'air atmosphérique dans la chambre arrière C2.

Dans ces conditions, la cloison mobile 22 exerce sur l'extrémité 12a du piston principal 12 une force d'assistance qui déplace le piston principal dans la direction S+ et qui s'oppose à un mouvement relatif du piston de réaction 5 par rapport au piston principal 12 suivant la direction S+, donc interdit au piston de réaction 5 d'entraîner le piston de changement de rapport 6.

Dans ce mode de fonctionnement, la pression hydraulique dans la chambre 13 s'exerce donc sur la section externe 53 du piston de réaction, finit par repousser le piston de réaction 5, le piston central d'obturation 4, et la bague 8 en comprimant le premier ressort 71, et fait ainsi apparaître sur le poussoir 3 la force de réaction normale qui s'oppose à la force d'actionnement.

En cas d'application sur la tige de commande d'une force d'actionnement variant de façon relativement rapide, le piston de réaction 5 entraîne le piston de changement de rapport 6 suivant la direction S+ avant que l'air atmosphérique puisse être admis dans la chambre arrière C2 en quantité suffisante pour que la cloison mobile 22 puisse exercer sur l'extrémité 12a du piston principal 12 une force d'assistance capable de déplacer le piston principal dans la direction S+ et de rattraper le mouvement du piston de réaction 5.

Dans ce mode de fonctionnement, le piston de changement de rapport 6 fait donc communiquer la première section interne 51 du piston de réaction avec la chambre de travail 13, de sorte que la pression hydraulique dans cette chambre 13 ne s'exerce, pour le piston de réaction et donc pour le poussoir 3, que sur la différence entre la section externe 53 de ce piston de réaction et la première section interne 51 de ce même piston de réaction.

Ainsi, en donnant le même diamètre, ou environ le même diamètre, à la première section interne 51 et à la section externe 53 du piston de réaction 5, il est possible, selon l'invention, d'annuler ou de réduire la force de réaction qui s'oppose à la force d'actionnement exercée sur le poussoir 3 en cas d'application rapide de cette force d'actionnement, donc d'augmenter la force d'actionnement disponible dans les situations de freinage d'urgence.

## Revendications

1. Maître-cylindre à réaction hydraulique pour servomoteur pneumatique d'assistance au freinage, comprenant :
un corps (11) percé d'un alésage principal (110);
un piston principal (12) cylindrique, percé d'un alésage secondaire (120), et dont une extrémité (12a) externe au corps est susceptible de recevoir une force d'assistance orientée suivant une première direction (S+), ce piston principal étant monté de façon étanche dans l'alésage principal pour y délimiter une chambre de travail (13) soumise en fonctionnement à une pression hydraulique; et
des moyens de réaction hydraulique montés coulissants dans l'alésage secondaire et incluant un poussoir (3) dont une extrémité (3a) externe au corps est susceptible de recevoir une force d'actionnement orientée suivant la première direction (S+);
la force d'assistance présentant par rapport à la force d'actionnement un retard croissant avec une vitesse d'application de la force d'actionnement;
**caractérisé en ce que** les moyens de réaction hydraulique comprennent en outre :
un piston central d'obturation (4), succédant au poussoir (3) suivant la première direction (S+) et comportant une extension radiale (41) sollicitée contre un épaulement interne (121) du piston principal par une première force élastique orientée suivant la première direction, ce piston central d'obturation (4) présentant en outre une face frontale (42) tournée vers la première direction et portant un siège d'obturation (43);
un piston de réaction (5) étagé et creux, présentant une première section interne (51) dans laquelle le piston central d'obturation (4) est monté à coulissement étanche, une seconde section interne (52) succédant à la première section interne dans la première direction, et une section externe (53) coulissant de façon étanche dans l'alésage secondaire (120), ce piston de réaction (5) étant sollicité, par une seconde force élastique orientée suivant une seconde direction (S-) inverse de la première direction et d'intensité inférieure à la première force élastique, vers une position de repos dans laquelle il est en appui contre l'extension radiale (41), ce piston de réaction (5) repoussant à son tour le poussoir (3), suivant la seconde direction (S-), contre une butée mobile (81) se déplaçant avec l'extension radiale (41); et
un piston de changement de rapport (6), tubulaire, ouvert sur la chambre de travail (13), monté à coulissement étanche dans la seconde section interne (52) du piston de réaction (5), et présentant une position de repos dans laquelle il est en appui contre le siège d'obturation (43) sous l'effet d'une troisième force élastique orientée suivant la seconde direction (S-) et inférieure à la seconde force élastique, ce piston de changement de rapport (6) comportant une butée d'entraînement (61) permettant au piston de réaction (5) de l'entraîner suivant la première direction (S+) après une course (H) non nulle à partir de la position de repos de ce piston de réaction, ce dont il résulte que le piston de changement de rapport (6) fait sélectivement communiquer la première section interne (51) du piston de réaction (5) avec la chambre de travail (13) en réponse à une application rapide de la force d'actionnement sur le poussoir, se transmettant au piston de changement de rapport (6) par l'intermédiaire du piston de réaction (5).

2. Maître-cylindre à réaction hydraulique suivant la revendication 1, **caractérisé en ce que** le piston de réaction (5) comporte des pattes d'appui (55) qui s'étendent suivant la seconde direction (S-) au-delà de l'extension radiale (41) du piston central d'obturation et par lesquelles il est en appui contre le poussoir (3).

3. Maître-cylindre à réaction hydraulique suivant l'une quelconque des revendications précédentes, **caractérisé en ce que** la butée mobile (81) est constituée par un rétrécissement interne d'une bague (8) sollicitée par la première force élastique contre l'extension radiale (41) du piston central d'obturation.

4. Maître-cylindre à réaction hydraulique suivant l'une quelconque des revendications précédentes, **caractérisé en ce que** la première section interne (51) et la section externe (53) du piston de réaction (5) ont même diamètre.

5. Maître-cylindre à réaction hydraulique suivant la revendication 3, **caractérisé en ce que** la première force élastique est exercée par un premier ressort (71) travaillant en compression entre la bague (8) et un premier appui fixe (122) prévu dans l'alésage secondaire.

6. Maître-cylindre à réaction hydraulique suivant la revendication 1, **caractérisé en ce que** la seconde force élastique est exercée par un second ressort (72) travaillant en compression entre un épaulement externe (54) du piston de réaction (5) et un second appui fixe (123) prévu dans l'alésage secondaire (120).

7. Maître-cylindre à réaction hydraulique suivant la revendication 1, **caractérisé en ce que** la troisième force élastique est exercée par un troisième ressort (73) travaillant en compression entre le piston de réaction (5) et le piston de changement de rapport (6).

## Claims

1. Master cylinder with hydraulic reaction for a pneumatic brake booster, comprising:
a body (11) pierced with a main bore (110);
a cylindrical main piston (12) pierced with a secondary bore (120), and of which one end (12a), outside the body, can receive a boost force directed in a first direction (S+), this main piston being mounted, without leaking, in the main bore in order therein to delimit a working chamber (13) which during operation is subjected to a hydraulic pressure; and
hydraulic reaction means mounted so that they can slide in the secondary bore and including a push rod (3) of which one end (3a), outside the body, can receive an actuating force directed in the first direction (S+);
with respect to the actuating force, the boost force having a delay that increases with the rate of application of the actuating force;
**characterized in that** the hydraulic reaction means further comprise:
a central shut-off piston (4) succeeding the push rod (3) in the first direction (S+) and comprising a radial extension (41) which is urged against an internal shoulder (121) of the main piston by a first elastic force directed in the first direction, this central shut-off piston (4) further having a front face (42) pointing in the first direction and carrying a shut-off seat (43);
a stepped and hollow reaction piston (5) having a first internal cross section (51) in which the central shut-off piston (4) is mounted with leaktight sliding, a second internal cross section (52) succeeding the first internal cross section in the first direction, and an external cross section (53) sliding in leaktight fashion in the secondary bore (120), this reaction piston (5) being urged by a second elastic force directed in a second direction (S-), the opposite of the first direction, and of a lower intensity than the first elastic force, toward a position of rest in which it rests against the radial extension (41), this reaction piston (5) in turn pushing the push rod (3) back in the second direction (S-) against a moving stop (81) that moves with the radial extension (41); and
a ratio-change piston (6) which is tubular, open to the working chamber (13), mounted with leaktight sliding in the second internal cross section (52) of the reaction piston (5) and has a position of rest in which it rests against the shut-off seat (43) under the effect of a third elastic force directed in the second direction (S-) and lower than the second elastic force, this ratio-change piston (6) comprising a driving stop (61) allowing the reaction piston (6) to drive it in the first direction (S+) after a non-zero travel (H) from the position of rest of this reaction piston, the result of this being that the ratio-change piston (6) selectively makes the first internal cross section (51) of the reaction piston (5) communicate with the working chamber (13) in response to a rapid application of the actuating force to the push rod transmitted to the ratio-change piston (6) via the reaction piston (5).

2. Master cylinder with hydraulic reaction according to claim 1, **characterized in that** the reaction piston (5) comprises bearing lugs (55) which extend in the second direction (S-) beyond the radial extension (41) of the central shut-off piston and via which it bears against the push rod (3).

3. Master cylinder with hydraulic reaction according to either one of the preceding claims, **characterized in that** the moving stop (81) consists of an internal narrowing of a ring (8) urged by the first elastic force against the radial extension (41) of the central shut-off piston.

4. Master cylinder with hydraulic reaction according to any one of the preceding claims, **characterized in that** the first internal cross section (51) and the external cross section (53) of the reaction piston (5) have the same diameter.

5. Master cylinder with hydraulic reaction according to claim 3, **characterized in that** the first elastic force is exerted by a first spring (71) working in compression between the ring (8) and a first fixed rest (122) provided in the secondary bore.

6. Master cylinder with hydraulic reaction according to claim 1, **characterized in that** the second elastic force is exerted by a second spring (72) working in compression between an external shoulder (54) of the reaction piston (5) and a second fixed rest (123) provided in the secondary bore (120).

7. Master cylinder with hydraulic reaction according to claim 1, **characterized in that** the third elastic force is exerted by a third spring (73) working in compression between the reaction piston (5) and the ratio-change piston (6).

## Patentansprüche

1. Hauptzylinder mit hydraulischer Reaktion für pneumatische Bremskraftverstärker, mit:
einem Körper (11), der mit einer Hauptbohrung (110) versehen ist;
einem zylindrischen Hauptkolben (12), der mit einer abgestuften, Sekundärbohrung (120) versehen ist, und bei dem ein außerhalb des Körpers liegendes Ende (12a) eine Hilfskraft aufnehmen kann, die entlang einer ersten Richtung (S+) wirkt, wobei dieser Hauptkolben dicht in der Hauptbohrung aufgenommen ist, um dort eine Arbeitskammer (13) zu begrenzen, die im Betrieb einem hydraulischen Druck ausgesetzt ist; und
hydraulischen Reaktionsmitteln, die gleitend in der Sekundärbohrung aufgenommen sind und eine Schubstange (3) umfassen, von der ein außerhalb des Körpers liegendes Ende (3a) eine Betätigungskraft aufnehmen kann, die entlang der ersten Richtung (S+) wirkt;
wobei die Hilfskraft in Bezug auf die Betätigungskraft eine Verzögerung aufweist, die mit der Geschwindigkeit zunimmt, mit der die Betätigungskraft aufgebracht wird;
**dadurch gekennzeichnet, daß** die hydraulischen Reaktionsmittel ferner umfassen:
einen zentralen Verschlußkolben (4), der auf die Schubstange (3) entlang der ersten Richtung (S+) folgt und eine radiale Erweiterung (41) aufweist, die gegen einen inneren Absatz (121) des Hauptkolbens durch eine erste elastische Kraft beaufschlagt ist, die entlang der ersten Richtung wirkt, wobei dieser zentrale Verschlußkolben (4) ferner eine Stirnfläche (42) aufweist, die in die erste Richtung weist und einen Verschlußsitz (43) trägt;
einen abgestuften und hohlen Reaktionskolben (5), der einen ersten inneren Abschnitt (51) aufweist, in dem der zentrale Verschlußkolben (4) dicht gleitend aufgenommen ist, einen zweiten inneren Abschnitt (52), der auf den ersten inneren Abschnitt in der ersten Richtung folgt, und einen äußeren Abschnitt (53), der dicht in der Sekundärbohrung (120) gleitet, wobei dieser Reaktionskolben (5) durch eine zweite elastische Kraft, die entlang einer zur ersten Richtung entgegengesetzten zweiten Richtung (S-) wirkt und die kleiner als die erste elastische Kraft ist, in Richtung einer Ruhestellung beaufschlagt ist, in der er an der radialen Erweiterung (41) anliegt, wobei dieser Reaktionskolben (5) wiederum die Schubstange. (3) entlang der zweiten Richtung (S-) gegen einen beweglichen Anschlag (81) zurückdrängt, der sich mit der radialen Erweiterung (41) verschiebt; und
einen rohrförmigen Verhältnisänderungskolben (6), der zur Arbeitskammer (13) offen ist, dicht gleitend in dem zweiten inneren Abschnitt (52) des Reaktionskolbens (5) aufgenommen ist und eine Ruhestellung aufweist, in der er an dem Verschlußsitz (43) unter der Wirkung einer dritten elastischen Kraft anliegt, die entlang der zweiten Richtung (S-) wirkt und kleiner ist als die zweite elastische Kraft, wobei dieser Verhältnisänderungskolben (6) einen Mitnahmeanschlag (61) aufweist, durch den ihn der Reaktionskolben (5) entlang der ersten Richtung (S+) nach einem von Null verschiedenen Hub (H) von der Ruhestellung dieses Reaktionskolbens mitnehmen kann, was zur Folge hat, daß der Verhältnisänderungskolben (6) selektiv den ersten inneren Abschnitt (51) des Reaktionskolbens (5) mit der Arbeistkammer (13) verbindet, und zwar als Antwort auf ein schnelles Aufbringen der Betätigungskraft auf den Schubkolben, die auf den Verhältnisänderungskolben (6) über den Reaktionskolben (5) übertragen wird.

2. Hauptzylinder mit hydraulischer Reaktion nach Anspruch 1, **dadurch gekennzeichnet, daß** der Reaktionskolben (5) Anlagestege (55) aufweist, die sich entlang der zweiten Richtung (S-) über die radiale Erweiterung (41) des zentralen Verschlußkolbens hinaus erstrecken und durch die er an dem Schubkolben (3) anliegt.

3. Hauptzylinder mit hydraulischer Reaktion nach einem der vorstehenden Ansprüche, **dadurch gekennzeichnet, daß** der bewegliche Anschlag (81) durch eine innere Verengung eines Ringes (8) gebildet ist, der durch die erste elastische Kraft gegen die radiale Erweiterung (41) des zentralen Verschlußkolbens beaufschlagt ist.

4. Hauptzylinder mit hydraulischer Reaktion nach einem der vorstehenden Ansprüche, **dadurch gekennzeichnet, daß** der erste innere Abschnitt (51) und der äußere Abschnitt (53) des Reaktionskolbens (5) den gleichen Durchmesser haben.

5. Hauptzylinder mit hydraulischer Reaktion nach Anspruch 3, **dadurch gekennzeichnet, daß** die erste elastische Kraft durch eine erste Feder (71) ausgeübt wird, die als Druckfeder zwischen dem Ring (8) und einer ersten, festen Abstützung (122) wirkt, die in der Sekundärbohrung vorgesehen ist.

6. Hauptzylinder mit hydraulischer Reaktion nach Anspruch 1, **dadurch gekennzeichnet, daß** die zweite elastische Kraft durch eine zweite Feder (72) ausgeübt wird, die als Druckfeder zwischen einem äußeren Absatz (54) des Reaktionskolbens (5) und einer zweiten, festen Abstützung (123) wirkt, die in der Sekundärbohrung (120) vorgesehen ist.

7. Hauptzylinder mit hydraulischer Reaktion nach Anspruch 1, **dadurch gekennzeichnet, daß** die dritte elastische Kraft durch eine dritte Feder (73) ausgeübt wird, die als Druckfeder zwischen dem Reaktionskolben (5) und dem Verhältnisänderungskolben (6) wirkt.
